# EUROPÄISCHE PATENTSCHRIFT

(11) **EP 1 085 049 B1**
(45) Veröffentlichungstag und Bekanntmachung des Hinweises auf die Patenterteilung: **12.05.2004**
(21) Anmeldenummer: 00119231.9
(22) Anmeldetag: 06.09.2000
(51) Int. Cl.: C08L 21/00, C08K 5/103, B60C 1/00, C08L 31/04

(54) **Kautschukmischung für Laufstreifen von Fahrzeugen**
Rubber composition for vehicle tyre tread
Composition de caoutchouc pour bande de roulement d'un pneumatique pour véhicule

(30) Priorität: 13.09.1999 DE 19943662
(43) Veröffentlichungstag der Anmeldung: 21.03.2001
(73) Patentinhaber: Continental Aktiengesellschaft, 30165 Hannover (DE)
(72) Erfinder: Dumke, Joachim, 31275 Lehrte (DE); du Bois, Andre, Dr., 30657 Hannover (DE); Schneider, Anja, 30419 Hannover (DE); Teves, Reinhard, Dr., 30926 Seelze (DE)

(56) Entgegenhaltungen:
- EP-A- 0 646 396
- EP-A- 0 921 150
- DE-A- 4 236 402
- US-A- 4 102 855
- PATENT ABSTRACTS OF JAPAN vol. 1997, no. 05, 30. Mai 1997 (1997-05-30) & JP 09 012784 A (TOYO TIRE &RUBBER CO LTD), 14. Januar 1997 (1997-01-14)

## Beschreibung

Die Erfindung betrifft eine schwefelvernetzbare Kautschukmischung für die Herstellung von Laufstreifen für Winterreifen, die als Kautschukkomponente zumindest ein Dienelastomer und als Füllstoff zumindest Ruß sowie weitere übliche Zusatzstoffe enthält.

Um die Fahreigenschaften von Winterreifen zu optimieren, hat es bisher nicht an Versuchen gemangelt. So werden für die Herstellung von Laufstreifen für Winterreifen z. B. Kautschukmischungen verwendet, die dem Reifen eine weiche Lauffläche verleihen. Solche Laufstreifen gewährleisten in Kombination mit hohen Dämpfungswerten gute Nässe- und Wintereigenschaften.

Um die Haftung auf vereister und schneeiger Fahrbahn zu erhöhen, sind des weiteren Kautschukmischungen für Laufstreifen von Winterreifen bekannt, in die vielfältige harte Partikel wie Walnußschalen, Metallspäne, Korund und ähnliches eingemischt wurden. Diese Varianten haben aber den entscheidenden Nachteil, daß nur eine unzureichende Haftung dieser Partikel zur Kautschukmatrix hergestellt werden kann und somit die Partikel bereits nach kurzer Fahrbetriebsdauer herausbrechen. Außerdem bewirken diese Teilchen aufgrund ihrer Nichtverformbarkeit eine vorzeitige Zerstörung des Laufstreifenmaterials.

Die Aufgabe der vorliegenden Anmeldung besteht darin, eine schwefelvernetzbare Kautschukmischung für die Herstellung von Laufstreifen für Winterreifen, bereitzustellen, die dem Fahrzeugreifen sehr gute Nässe- und Wintereigenschaften, speziell Eiseigenschaften, verleihen, wobei die obengenannten Nachteile ausgeräumt werden. Gelöst wird diese Aufgabe erfindungsgemäß dadurch, daß die Kautschukmischung bezogen auf 100 Gewichtsteile der gesamten Dienelastomere
a) 5 - 80 Gewichtsteile Ruß,
b) 0 - 100 Gewichtsteile Kieselsäure sowie
c) 5 - 30 Gewichtsteile eines Ethylen-Vinylacetat-Copolymers mit einem Vinylacetatgehalt zwischen 60 und 80 Gewichtsprozent
enthält.

Durch die Verwendung von 5 bis 30 Gewichtsteilen des genannten Ethylen-Vinylacetat-Copolymers (EVA) bezogen auf 100 Gewichtsteile der gesamten Dienelastomere wurde überraschenderweise festgestellt, daß solch eine Laufstreifenmischung hervorragende Nässe- und Wintereigenschaften, insbesondere eine ausgesprochen gute Eishaftung, aufweist. Der Grund hierfür ist darin zu sehen, daß aufgrund der Materialeigenschaften des Ethylen-Vinylacetat-Copolymers dieses bei tiefen Temperaturen hart und bei höheren Temperaturen weich in der vulkanisierten Kautschukmischung vorliegt. Das bedeutet, daß harte Bestandteile nur vorhanden sind, wenn sie benötigt werden, nämlich bei Eis und Schnee. Bei einer Temperaturerhöhung (Vorliegen von Nässe) werden diese Bestandteile weich und verbessern somit die Dämpfung der vulkanisierten Kautschukmischung und somit deren Nässeeigenschaften.

Die Verwendung von Ethylen-Vinylacetat-Copolymeren in Kautschukmischungen für verschiedene Einsatzgebiete ist bereits aus der US-A-4102855, der EP-A-0646396, der JP-A-09012784 und der DE-A-4236402 bekannt.

Die erfindungsgemäße Kautschukmischung enthält als Kautschukkomponente zumindest ein schwefelvernetzbares Dienelastomer ausgewählt bevorzugt aus Naturkautschuk oder cis-Polyisopren mit einem cis-1,4-Anteil > 90 mol% oder Styrol-Butadien-Copolymer oder Polybutadien oder Mischungen hieraus. Außerdem kann die erfindungsgemäße Kautschukmischung weiterhin ein oder mehrere aus dem Stand der Technik bekannte schwefelvernetzbare Kautschukkomponenten enthalten, z. B. folgende: Acrylnitril-Butadien-Copolymer (NBR), Ethylen-Propylen-Dien-Terpolymer (EPDM).

Als weiteres Polymer enthält die erfindungsgemäße Kautschukmischung 5 bis 30 Gewichtsteile, bevorzugt 15 bis 30 Gewichtsteile, eines Ethylen-Vinylacetat-Copolymers (EVA) bezogen auf 100 Gewichtsteile der gesamten Dienelastomere. Anteile größer 30 Gewichtsteile EVA bewirken, daß die gesamte vulkanisierte Kautschukmischung bei Gebrauchstemperatur hart werden kann, und müssen daher vermieden werden. Der Vinylacetatgehalt (VAc) des Ethylen-Vinylacetat-Copolymers liegt zwischen 60 und 80 Gewichtsprozent (bezogen auf EVA). Mit diesem Vinylacetatgehalt konnte ein Eigenschaftsoptimum des vulkanisierten Laufstreifens hinsichtlich dem Verhalten bei Nässe und Eis/Schnee erreicht werden.

Als Füllstoff wird in der erfindungsgemäßen Kautschukmischung Ruß verwendet. So enthält die Kautschukmischung 5 bis 80 Gewichtsteile Ruß bezogen auf 100 Gewichtsteile der gesamten Dienelastomere. Die Ruße weisen bevorzugt folgende Charakteristika auf : DBP-Zahl (ASTM D 2414) 90 bis 200 cm³ /100 g und CTAB-Zahl (ASTM D 3765) von 35 bis 220 m²/g.

Als weiteren Füllstoff enthält die erfindungsgemäße Kautschukmischung gegebenenfalls Kieselsäure. Die verwendete Kieselsäure weist z. B. eine BET-Oberfläche von 145 - 270 m²/g (ASTM D 5604), eine CTAB-Zahl von 120 - 285 m²/g (ASTM D 3765) und ein Porenvolumen von 0,7 - 1,7 ml/g (DIN 66133) auf. Als Kieselsäure kann somit z.B. *VN3* (Fa. Degussa AG, Deutschland) zum Einsatz kommen. Zur Anbindung der Kieselsäure an das Polymersystem werden Aktivierungsmittel, z. B. Silane wie Bis-3-(triethoxysilylpropyl)tetrasulfid (TESPT) bzw. das entsprechende Disulfid, verwendet.

Des weiteren enthält die erfindungsgemäße Kautschukmischung übliche Zusatzstoffe wie Alterungsschutzmittel (z. B. 6PPD: N-Phenyl-N'-(1,3-dimethylbutyl)-p-phenylendiamin oder DTPD: N,N'-Ditoluyl-p-phenylendiamin), Verarbeitungshilfsmittel (z. B. Stearinsäure, Wachse, Fette, Dispergatoren), inaktive Füllstoffe und Weichmacher.

Besonders bevorzugt ist die Verwendung von zumindest einem Tieftemperaturweichmacher vom Estertyp. Darunter sind solche Weichmachertypen zu verstehen, wie sie in der EP 0 677 548 A1 beschrieben sind, wie z. B. Rizinusöl oder Rapsöl. Es wurde festgestellt, daß diese besonderen Weichmachertypen in Mischungen für Reifenlaufstreifen insbesondere die Eishaftung weiter erhöhen. Dabei ist es aus ökologischen Gründen besonders vorteilhaft, wenn als Tieftemperaturweichmacher Rapsöl verwendet wird. Die Tieftemperatur-Esterweichmacher sollen in Dosierungen von 2 bis 20 Gewichtsteilen bezogen auf 100 Gewichtsteile der gesamten Dienelastomere, bevorzugt 5 bis 10 Gewichtsteile, verwendet werden.

Zur Vulkanisation der Kautschukmischung werden Schwefel bzw. Schwefelspender (z. B.: DTDM: Dithiodimorpholin) verwendet. Außerdem werden vulkanisationsbeeinflussende Stoffe wie Beschleuniger oder Aktivatoren (z. B. CBS: Benzothiazyl-2-cyclohexylsulfenamid, TMTD: Tetramethylthiuramdisulfid, TBBS: Benzothiazyl-2-tert.-butylsulfenamid) der Kautschukmischung zugesetzt.

Die Herstellung der erfindungsgemäßen Kautschukmischung erfolgt auf herkömmliche Art und Weise in einer oder mehreren Mischstufen. Anschließend wird diese weiterverarbeitet, z. B. durch einen Extrusionsvorgang, und in die entsprechende Form gebracht. Dieser Laufstreifenmischungsrohling wird bei der Herstellung des Reifenrohlings wie bekannt aufgelegt. Nach der Vulkanisation des Reifens weist dieser hervorragende Nässe- und Wintereigenschaften auf. Dabei ist es unerheblich, ob der gesamte Laufstreifen aus einer einzigen Mischung hergestellt worden ist oder einen z. B. Cap- und Base-Aufbau aufweist, denn wichtig ist, daß zumindest die mit der Fahrbahn in Berührung kommende Fläche aus der erfindungsgemäßen Kautschukmischung hergestellt worden ist.

Anhand der folgenden Tabellen 1 und 2 soll ein Ausführungsbeispiel näher erläutert werden. Die Mischungen I, II und IIA sind Vergleichsmischungen und die Mischungen IA bis IC sowie IIB bis IIC weisen erfindungsgemäße Zusammensetzungen auf.

**Tabelle 1**

| | ***Mischungen [Gewichtsteile]*** | | | | | | | |
|---|---|---|---|---|---|---|---|---|
| **Bestandteile** | **I** | **IA** | **IB** | **IC** | **II** | **IIA** | **IIB** | **IIC** |
| Naturkautschuk | 60 | 60 | 60 | 60 | - | - | - | - |
| Polybutadien, (BUNA 1712*) | 27,5 | 27,5 | 27,5 | 27,5 | - | - | - | - |
| Polybutadien (SKD 14121*) | 20 | 20 | 20 | 20 | - | - | - | - |
| Polybutadien (Neocis BR 60****) | - | - | - | - | 40 | 40 | 40 | 40 |
| S-SBR (VSL 1945*) | - | - | - | - | 82,5 | 82,5 | 82,5 | 82,5 |
| EVA (40 Gew.% VAc)* | - | - | - | - | - | 20 | - | - |
| EVA (60 Gew.% VAc)* | - | 10 | 20 | 30 | - | - | 20 | - |
| EVA (80 Gew.% VAc)* | - | - | - | - | - | - | - | 20 |
| Kieselsäure VN3** | - | - | - | - | 70 | 70 | 70 | 70 |
| Ruß N 234 | 74 | 74 | 74 | 74 | - | - | - | - |
| Aktivator X50S** | - | - | - | - | 14 | 14 | 14 | 14 |
| Rapsöl | - | - | - | - | 5 | 5 | 5 | 5 |
| aromatisches Öl | 35,5 | 35,5 | 33,5 | 31,5 | 10 | 8 | 8 | 8 |
| ZnO | 2,5 | 2,5 | 2,5 | 2,5 | 3 | 3 | 3 | 3 |
| Stearinsäure | 1 | 1 | 1 | 1 | 2 | 2 | 2 | 2 |
| Alterungsschutzmittel | 2 | 2 | 2 | 2 | 2,5 | 2,5 | 2,5 | 2,5 |
| Lichtschutzwachs Standard | 1 | 1 | 1 | 1 | 1 | 1 | 1 | 1 |
| Struktol WB 212*** | - | - | - | - | 3,5 | 3,5 | 3,5 | 3,5 |
| Schwefel | 1,8 | 1,8 | 1,8 | 1,8 | 1 | 1 | 1 | 1 |
| Beschleuniger | 1,6 | 1,6 | 1,6 | 1,6 | 3,5 | 3,5 | 3,5 | 3,5 |

| | | | | | | | | |
|---|---|---|---|---|---|---|---|---|
| * Fa. Bayer AG, Deutschland, BUNA 1712 und VLS 1945 sind mit 37,5 Gewichtsteilen Öl pro 100 Gewichtsteile Kautschuk verstreckt | | | | | | | | |
| ** Fa. Degussa-Hüls AG, Deutschland, X50S = TESPT auf Ruß (TESPT:Ruß = 1:1); | | | | | | | | |
| *** Fa. Rheinchemie AG, Deutschland | | | | | | | | |
| **** Fa. Enichem, Italien | | | | | | | | |

**Tabelle 2**

| **Eigenschaften** | **I** | **IA** | **IB** | **IC** | **II** | **IIA** | **IIB** | **IIC** |
|---|---|---|---|---|---|---|---|---|
| Härte [Shore A] | 60 | 60 | 59 | 60 | 60 | 59 | 58 | 59 |
| tanδ 0°C | 0,406 | 0.409 | 0,404 | 0,398 | 0,337 | 0,328 | 0,348 | 0,352 |
| tanδ 60°C | 0,240 | 0,236 | 0,234 | 0,234 | 0,142 | 0,144 | 0,145 | 0,141 |
| Eishaftung (Werte> 100 sind Verbesserungen) | 100 | 104 | 106 | 107 | 100 | 102 | 105 | 110 |

Die Tabelle 2 zeigt, daß die Laufstreifenmischungen, die die erfindungsgemäßen EVA-Anteile enthalten (IA bis IC), im Vergleich zur Zusammensetzung I (kein EVA) eine hervorragende Traktion auf Eis aufweisen. Gleichzeitig wurde erfindungsgemäß das ansprechende Niveau im Naßrutschverhalten (tanδ 0 °C) und Rollwiderstand (tanδ 60 °C) entsprechend der Mischung 1 beibehalten.

Der Einfluß des Vinylacetatgehaltes im Ethylen-Vinylacetat-Copolymer wird bei den erfindungsgemäßen Laufstreifenmischungen IIB bis IIC ersichtlich. So weisen die Zusammensetzungen IIB bis IIC eine bessere Eishaftung im Vergleich zur Mischung II und IIA auf. Hervorzuheben sind insbesondere die Ergebnisse der Eishaftung bei den Mischungen mit Vinylacetatgehalten von 60 und 80 Gewichtsprozent (IIB und IIC), wobei bemerkenswert ist, daß bei diesen Laufstreifenmischungen das Naßrutschverhalten (bei gleichbleibendem Rollwiderstand) gesteigert werden konnte.

## Patentansprüche

1. Schwefelvernetzbare Kautschukmischung für die Herstellung von Laufstreifen für Winterreifen, die als Kautschukkomponente zumindest ein Dienelastomer und als Füllstoff zumindest Ruß sowie weitere übliche Zusatzstoffe enthält, wobei
die Kautschukmischung bezogen auf 100 Gewichtsteile der gesamten Dienelastomere
a) 5 - 80 Gewichtsteile Ruß,
b) 0 - 100 Gewichtsteile Kieselsäure sowie
c) 5 - 30 Gewichtsteile eines Ethylen-Vinylacetat-Copolymers enthält, **dadurch gekennzeichnet, dass** das Ethylen-Vinylacetat-Copolymer einen aufweist. Vinylacetatgehalt zwischen 60 und 80 Gewichtsprozent.

2. Kautschukmischung nach Anspruch 1, **dadurch gekennzeichnet, daß** der Anteil des Ethylen-Vinylacetat-Copolymers 15 bis 30 Gewichtsteile auf 100 Teile des gesamten Dienelastomere beträgt.

3. Kautschukmischung nach zumindest einem der vorhergehenden Ansprüche, **dadurch gekennzeichnet, daß** die Kautschukmischung als Zusatzstoff zumindest einen Tieftemperaturweichmacher vom Estertyp enthält.

4. Kautschukmischung nach Anspruch 3, **dadurch gekennzeichnet, daß** die Kautschukmischung als Tieftemperaturweichmacher vom Estertyp Rapsöl enthält.

5. Kautschukmischung nach Anspruch 3 oder 4, **dadurch gekennzeichnet, daß** der Anteil des Tieftemperaturweichmachers vom Estertyp 5 bis 10 Gewichtsteile auf 100 Teile der gesamten Dienelastomere beträgt.

6. Fahrzeugluftreifen, **dadurch gekennzeichnet, daß** er einen Reifenlaufstreifen aufweist, der aus einer Kautschukmischung nach zumindest einem der vorhergehenden Ansprüche hergestellt ist.

## Claims

1. Sulphur-cross-linkable rubber mixture for the production of tread strips for winter tyres, said mixture containing as the rubber component at least one diene elastomer and as the filler at least carbon black as well as additional customary additives, the rubber mixture containing, relative to 100 parts by weight of the total diene elastomers:
a) 5-80 parts by weight carbon black,
b) 0-100 parts by weight silica,
c) 5-30 parts by weight of an ethylene-vinyl acetate copolymer,
**characterised in that**
the ethylene-vinyl acetate copolymer has a vinyl acetate content of between 60 and 80 percent by weight.

2. Rubber mixture according to claim 1, **characterised in that** the proportion of the ethylene-vinyl acetate copolymer is 15 to 30 parts by weight relative to 100 parts of the total diene elastomers.

3. Rubber mixture according to at least one of the preceding claims, **characterised in that** the rubber mixture contains as an additive at least one low-temperature plasticiser of the ester type.

4. Rubber mixture according to claim 3, **characterised in that** the rubber mixture contains rape-seed oil as the low-temperature plasticiser of the ester type.

5. Rubber mixture according to claim 3 or 4, **characterised in that** the proportion of the low-temperature plasticiser of the ester type is 5 to 10 parts by weight relative to 100 parts of the total diene elastomers.

6. Pneumatic vehicle tyre, **characterised in that** it has a tread strip which is produced from a rubber mixture according to at least one of the preceding claims.

## Revendications

1. Composition de caoutchouc pouvant être réticulée avec du soufre pour la fabrication de bande de roulement pour des pneus d'hiver, qui contient comme composant de caoutchouc au moins un élastomère diénique et comme matière de charge au moins de la suie ainsi que d'autres additifs courants,
la composition de caoutchouc contenant pour 100 parties pondérales de l'ensemble des élastomères diéniques
a) 5 à 80 parties pondérales de suie,
b) 0 à 100 parties pondérales d'acide silicique,
c) 5 à 30 parties pondérales d'un copolymère éthylène-acétate de vinyle, **caractérisée en ce que** le copolymère éthylène-acétate de vinyle présente une teneur en acétate de vinyle comprise entre 60 et 80 parties pondérales.

2. Composition de caoutchouc selon la revendication 1, **caractérisée en ce que** la fraction du copolymère éthylène-acétate de vinyle est de 15 à 30 parties pondérales sur les 100 parties de l'ensemble des élastomères diéniques.

3. Composition de caoutchouc selon au moins l'une quelconque des revendications précédentes, **caractérisée en ce que** la composition de caoutchouc contient comme additif au moins un plastifiant à basse température du type ester.

4. Composition de caoutchouc selon la revendication 3, **caractérisée en ce que** la composition de caoutchouc contient de l'huile de colza comme plastifiant à basse température du type ester.

5. Composition de caoutchouc selon la revendication 3 ou 4, **caractérisée en ce que** la fraction de plastifiant à basse température du type ester représente 5 à 10 parties pondérales sur 100 parties de l'ensemble des élastomères diéniques.

6. Pneumatique de véhicule, **caractérisé en ce qu'**il présente une bande de roulement qui est fabriquée à base d'une composition de mélange selon au moins l'une quelconque des revendications précédentes.
